# EUROPEAN PATENT APPLICATION

(11) **EP 1 609 525 A1**
(43) Date of publication of application: **28.12.2005**
(21) Application number: 04425438.1
(22) Date of filing: 14.06.2004
(51) Int. Cl.: B01J 19/00, C08G 18/08, B01J 14/00

(54) **Plant for manufacturing polyurethane goods.**

(71) Applicant: Tema Technopolymers S.r.l., 24040 Pontirolo Nuovo (Bergamo) (IT)
(72) Inventor: Auci, Pietro, 24049 Verdellino (Bergamo) (IT)
(74) Representative: Tansini, Elio Fabrizio

(57) **Abstract**

A plant for manufacturing polyurethane goods comprises at least two tanks (2) for chemical reactants such as polyols and isocyanates, at least one reactor (3) operatively associated with the tanks (2) to create a chemical polyurethane compound, at least one final use apparatus (8) to receive the chemical compound, and movement means to send the chemical compound to the use apparatus (8). The plant further comprises adjusting means (5) operatively active at least on the reactor (3) to keep the reactant and/or product mass to an operating temperature included between a minimum and a maximum temperature and/or to keep the same reactant and/or product mass within a viscosity range included between a minimum viscosity and a maximum viscosity; the reactor (3) has capacity and sizes adapted to produce an amount of chemical compound as strictly required for completing at least one and/or few units of goods-manufacturing cycles.

## Description

The present invention relates to a plant for manufacturing polyurethane goods of the PU and/or TPU type.

Generally, referred to as polyurethanes are all polymeric substances containing several urethane bonds.

The polyurethane synthesis is based on the reaction between isocyanates having one or more isocyanic groups per molecule and alcohols having two or more hydroxylic groups per molecule, typically polyols.

In particular, the polyurethane can take a structure formed of straight polymeric chains, in which case it is called thermoplastic polyurethane, or, alternatively, it can take a structure in which the polymeric chains are such disposed as to form a three-dimensional crystalline structure, giving origin to the so-called thermosetting polyurethane.

Polyurethanes are used in a wide variety of industrial applications, because it is possible to choose, based on the type of application, the physical and mechanical features of the finished product or the goods to be manufactured.

For example, goods such as shoe soles, seals, adhesive films and others can be manufactured by selecting the most suitable chemical base compositions.

The plants of known type contemplate use of a reactor (that in some cases can also be a twin worm screw) within which the chemical base compounds are inserted and mixed in order to cause the chemical polymerisation reactions.

The obtained mixture or compound that is already chemically stable, is then submitted to the action of a granulator to be reduced to granules that are useful for transport and storage.

Subsequently, the granules of the stabilized chemical compound are heated so that they reach an aggregation state that is called plastic state; the plasticized PU or TPU mass is then submitted to the action of one or more worm screws and extruded or cast into suitable moulds conforming in shape to the article of manufacture that is wished to be obtained.

Sometimes, when specifically required, an inert filler can be directly injected into the plasticized PU or TPU mass in order to vary the physical features such as density for example, of the polyurethane that will form the article of manufacture.

It is to be noted that in any case, the polyurethane polymerisation processes are not modified because, as said, the granules introduced into the plant are already chemically stable compounds.

In other words, the only processes taking place within the worm screw are exclusively of physical character.

The Applicant has found that the chemical plants of the known art for manufacturing polyurethane goods can be improved under different points of view. In fact, the high viscosity of the chemical compound mass that is introduced into the screws, which viscosity is intrinsic in the plasticized polyurethane, involves a high working pressure within the screws themselves which will give rise to a very big and expensive plant as a whole.

In addition, to prevent formation of clots or local thickening within the very viscous mass of the plasticized polyurethane and to ensure an optimal filling of the moulds, the ducts, worm screws and all components forming the plant must be made so as to comply with severe criteria in the fluid dynamics field.

In other words, the particular features of the plasticized polyurethane and specifically the high viscosity of same involve a well apparent complexity in plant construction and in addition high mechanical powers are to be supplied to the plant in order to obtain heating and plasticization, which will bring about a high energy consumption and economical drawbacks in terms of operating costs.

In addition, to manufacture a wide variety of articles with different physico-chemical features, a very wide and varied range of granules of already stabilized chemical compounds must be available, which is a drawback from a logistic and economical point of view.

Furthermore, changing the polyurethane type, i.e. changing the type of granules to be used, involves a long period during which the machine stops, since wearisome and difficult operations are required for carrying out chemical washing of all components constituting the plant, depuration of the whole plant from any residue of polyurethane that is no longer utilised, and fixing of new parameters for the production line.

The last-mentioned drawback is of the greatest importance because, as known, the residues of plasticized polyurethane have a tendency to harden and pass to the solid state within short periods of time, which will make washing and the operations for fixing new parameters in the plant very complicated and expensive.

Finally, the plants of the known art are not adapted to produce articles of manufacture or semi-finished products made of low-hardness polyurethane, i.e. with a hardness lower than about 60 Shore A because, taking into account the presently used production techniques, the goods would require too long times for stabilizing the polymeric structure (in the mould).

In the above context, the present invention mainly aims at proposing a plant for manufacturing polyurethane goods that is able to obviate the above mentioned drawbacks.

In particular, it is an aim of the present invention to make available a plant for manufacturing polyurethane goods that is capable of ensuring a high production flexibility allowing the physico-chemical features of the article of manufacture made of polyurethane, both of the PU and TPU types, to be varied depending on the particular requirements, the machine down-time being very short.

In other words, the present invention aims at providing a plant that is adapted to indifferently treat the PU and/or TPU polyurethane types.

It is a further aim of the present invention to propose a plant for manufacturing polyurethane goods that is capable of working with very reduced motive power.

Finally, it is an aim of the present invention to make available a plant for manufacturing polyurethane goods which has reduced working pressures.

The technical task mentioned and the aims specified are substantially achieved by a plant for manufacturing polyurethane goods comprising the technical features set out in one or more of the appended claims.

Further features and advantages of the present invention will become more apparent from the detailed description of a preferred but not exclusive embodiment of a plant for manufacturing polyurethane goods, as seen in the accompanying drawing showing a flow chart of the plant for manufacturing polyurethane goods in accordance with the invention.

With reference to the drawing, a plant for manufacturing polyurethane goods in accordance with the present invention has been generally identified with reference numeral 1.

The plant 1 comprises at least two tanks 2 for storage of chemical base reactants for the polymerization reaction of a polyurethane.

In particular, one of the two tanks 2 is adapted to contain a polyol maintained to the liquid state whereas the other tank is adapted to contain a isocyanate maintained to the liquid state as well.

In the plant a plurality of tanks 2 can be provided both to contain the base reactants of the above specified type and possible additives, such as reaction catalysts, retarding agents, surface-active agents, expanding agents and others. Furthermore, in addition to the already mentioned substances, the plurality of tanks 2 can advantageously also contain different types of polyols and isocyanates.

Downstream of tanks 2, the plant 1 may comprise at least one reactor 3, i.e. a vessel adapted to mix the chemical components of the reaction together and make them react. Reactor 3 is fed with predetermined amounts of chemical reactants, from two or more tanks 2, depending on the polyurethane amount that is wished to be produced.

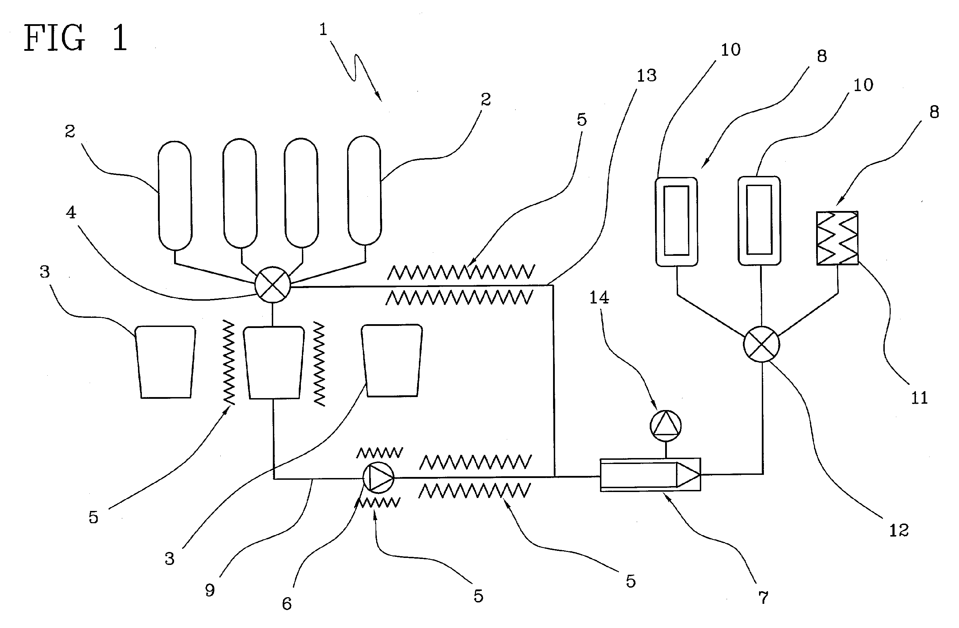

In a possible embodiment, tanks 2 are connected with the reactor through a first multi-way valve 4, as shown in Fig. 1. However, alternatively, connection between tanks 2 and reactor 3 can take place through a plurality of ducts associated with a plurality of valves or with any other connecting means allowing not only selection of the reactant amounts, but also of the predetermined types of reactants, depending on the features of the polyurethane to be produced. In addition, plant 1 may comprise a plurality of reactors 3, possibly of different types and capacities, that can be all connected with tanks 2 simultaneously or in succession.

Advantageously, in the present invention the volume of each reactor 3 is adapted to produce such a polyurethane amount that execution of a limited and predetermined number of goods-manufacturing cycles is allowed, in particular this number of manufacturing cycles being of few units and in any case consisting of at least one cycle.

In other words, unlike the plants of the known art, in which the reactors are suitably sized for continuously producing an indefinite amount of polyurethane that will not be immediately used but will be stored for subsequent uses, in the present invention the reactor size is suitably studied and envisaged so as to avoid storage of the polyurethane that is not immediately used for goods production.

In this manner, the amount of polymer produced is the one strictly necessary to complete a limited number of cycles, and at least one cycle, for goods manufacture, so that the plant is in operation for the time strictly required for completion of said number of manufacturing cycles.

The reactants contained and mixed in reactor 3, during their polymerization reaction, are constantly maintained to a given temperature through adjusting means 5 associated with the reactor 3 in use.

In particular, the adjusting means 5 can be set to keep a predetermined operating temperature, at least within the reactor 3 that, for example, can be at most the same as the temperature causing liquefaction or melting of the polyurethane type under production.

In this connection, it is to be pointed out that advantageously the product being formed in reactor 3 and that will subsequently flow through the whole plant 1 is constantly and completely maintained in an aggregation state that is not the plastic or plasticized state that is typical of the known production processes.

Advantageously, the adjusting means 5 acts also on means for movement of the chemical compound and on all ducts and components of plant 1, to keep the chemical compound to the liquid or melted state preventing the same from becoming too viscous due to passage to a plastic state or from solidifying, due to the polymerization reactions already occurred and/or still in progress.

Within the scope of the present invention, it will be appreciated that the adjusting means 5 is active on said at least one reactor 3 (or in any case, as described later, said means is also active on other parts of the plant) to control and/or maintain other temperature types and/or values: in particular, the adjusting means 5 can be active on at least one reactor 3 to maintain the chemical compound to a minimum operating temperature that is at least the same as the minimum solidification temperature of at least one of the reactants (that conveniently, should more reactants have different solidification temperatures, will be the minimum one between the respective solidification temperatures).

In addition, the adjusting means 5 can be at least active on at least one reactor 3 to keep said chemical compound to a maximum operating viscosity that will be at most the same as a viscosity of the polymeric product (resulting from the combination of the reactants) to the liquefaction or melting temperature of same; at the same time the adjusting means 5 can be active on the plant (and therefore at least on one reactor 3) to keep a minimum operating viscosity that will be at least the same as a viscosity of at least one reactant to the reactant temperature on introduction of same into the reactor 3.

In other words, the adjusting means 5 can be active on one or more parts of plant 1 to keep the mass formed of the reactants and/or the polymeric product (resulting from combination of the reactants) to an operating temperature included between a minimum and a maximum temperature as above stated, or also to keep this reactant and/or product mass within a viscosity range included between a minimum viscosity and a maximum viscosity as above stated.

It is to be noted that, due to the presence of the adjusting means 5 and by utilising the thermal energy liberated during the reactant combination (exothermic reaction), control and maintenance of the reactant and/or product mass to the melting temperature can be obtained and undesirable and uncontrollable excesses of thermal energy (that in known plants are due to the friction action exerted by the worm screw, for example) are avoided, which excesses would cause a temperature increase to values dangerous for the polymer.

In addition, since there is no longer a completely finished reaction within the different components of the plant, the operating temperature (and consequently the working pressures) can be drastically reduced and the reactant and/or polymer mass can be maintained to a low viscosity; this viscosity will be selected so as to simultaneously enable easy flowing of the reactant and/or product mass in the plant ducts and/or moulds in accordance with the present invention.

As a consequence of the particular choice of maintaining the above mentioned operating temperature, the different components of the plant (as well as the sources of mechanical and/or thermal power) do not require very important sizes.

Activation of the adjusting means 5 and temperature control in all points of plant 1 can take place in an automatic manner through a command and control unit, not shown, also capable of controlling and coordinating all loading and unloading operations of reactor 3.

In a possible embodiment of the movement means, a pump 6 sends the chemical compound to injection means 7 that will send it to the inside of final use apparatus 8.

The reactor 3, pump 6 and injection means 7 are therefore connected with each other in series. This connection is ensured by a primary transfer duct 9 for the chemical compound.

Advantageously, the primary transfer duct 9 too can be submitted to the action of the adjusting means 5 in order to control temperature and/or viscosity of the reactant mass and/or of the chemical compound resulting from combination of said reactants.

Depending on the specific requirements, said movement means can be made in the most appropriate manner; a worm screw with a short screw can be for example provided, or, alternatively, a piston pushing the chemical compound into the final use apparatus 8 through appropriate nozzles not shown can be used.

Advantageously, the movement means can comprise means 14 for creating the vacuum or a negative pressure, in place of, or coupled with said pump 6, to move the liquid chemical compound at the inside of plant 1.

In fact, by arranging said means 14 for creating the vacuum or a negative pressure, if any, downstream of the whole plant, and more specifically at the injection means 7, the fluid chemical compound can be moved within the plant with a minimum pressure difference (like that produced by said means for creating the vacuum or a negative pressure), due to the low viscosity of the chemical product in the liquid state.

The final use apparatus 8 can conveniently comprise known devices that may also be different from each other, such as one or more moulds 10 and/or one granulator 11, depending on the type of article of manufacture to be made.

In the plant diagram in Fig. 1, by way of example two moulds 10 and one granulator 11 have been shown and they are connected in parallel to the injection means 7 through a second multi-way valve 12.

Advantageously, should not the chemical base reactants require use of a reactor for the reaction, the plant 1 would comprise a secondary transfer duct 13 connecting the tanks 2 with the movement means. This connection, depending on the specific cases, can take place directly or, as diagrammatically shown in the drawing, through means for selection of predetermined tanks 2, such as the already mentioned multi-way valve 4.

Advantageously, the secondary transfer duct 13 too is submitted to the action of the adjusting means 5 so that the temperature and/or viscosity of the reactant and/or product mass at the inside of said duct are controlled and maintained within the above described ranges.

The chemical reactants or the chemical compound being formed that pass through the secondary transfer duct 13 and are constantly maintained to a liquid state, are forced during their travel towards the final use apparatus 8, by means of the pressure difference produced by the vacuum means 14 or in any case by any type of movement means.

Irrespective of the movement means used, a predetermined flow rate of chemical reactants is ensured to the final use apparatus 8 inside which the polymerization reaction will take place.

Should exclusion of one of the two transfer ducts 9, 13 be required, the first multi-way valve 4 can selectively operate cutting out the reactant flow to reactor 3 and allowing passage of chemical reactants to the auxiliary transfer duct 13 or vice versa; alternatively, transfer ducts independent of each other can be provided or also each duct can be equipped with one or more cutoff valves.

The present invention achieves the intended purposes.

In fact, due to the plurality of tanks, the physico-chemical features of the produced polyurethane can be selected a priori, which makes the plant very versatile.

In addition, the plant versatility is further increased by the reactor sizes and capacity, since said reactors are conveniently sized to produce a predetermined amount of polyurethane as strictly required for completing a number of few units of manufacturing cycles.

The motive power necessary to the plant is very reduced because, due to the presence of the adjusting means, only chemical compounds or reactants in the liquid or melted aggregation state, and therefore with a reduced viscosity, flow through the plant.

The last-mentioned feature of the plant of the invention, i.e. the presence of adjusting means ensuring flowing of completely liquid chemical compounds or reactants through the plant itself, together with the particular capacity and sizes of the reactors, enable the machine down-time to be greatly reduced because washing and depuration of the whole plant from any residue of chemical compound are very quick and easy, as no intervention is required for eliminating traces of solid or plastic chemical compounds stuck to the inner walls of the plant ducts or components.

Finally, the adjusting means ensuring flowing of a chemical compound or of reactants in a liquid or melted state to the final use apparatus, in particular the moulds, allows the polymerization process to take place during periods of time of selected length, so that polyurethane goods of low hardness, in particular of a hardness included between about 30 and about 85 Shore A can be directly obtained.

## Claims

**1.** A plant for manufacturing polyurethane goods, comprising:
at least two tanks (2) for chemical reactants such as polyols and isocyanates, at least one reactor (3) operatively associated with said at least two tanks (2) to create a chemical and preferably a polyurethane compound, at least one final use apparatus (8) to receive said chemical compound, and movement means to send the chemical compound to said final use apparatus (8); **characterised in that** it comprises adjusting means (5) operatively active at least on said at least one reactor (3) to maintain said chemical compound to a maximum operating temperature that is at most the same as the liquefaction or melting temperature of said compound.

**2.** A plant for manufacturing polyurethane goods, comprising:
at least two tanks (2) for chemical reactants such as polyols and isocyanates, at least one reactor (3) operatively associated with said at least two tanks (2) to create a chemical and preferably a polyurethane compound, at least one final use apparatus (8) to receive said chemical compound, and movement means to send the chemical compound to said final use apparatus (8); **characterised in that** it comprises adjusting means (5) operatively active at least on said at least one reactor (3) to maintain said chemical compound to a minimum operating temperature that is at least the same as the minimum solidification temperature of at least one of the reactants.

**3.** A plant for manufacturing polyurethane goods, comprising:
at least two tanks (2) for chemical reactants such as polyols and isocyanates, at least one reactor (3) operatively associated with said at least two tanks (2) to create a chemical and preferably a polyurethane compound, at least one final use apparatus (8) to receive said chemical compound, and movement means to send the chemical compound to said final use apparatus (8); **characterised in that** it comprises adjusting means (5) operatively active at least on said at least one reactor (3) to maintain said chemical compound to a maximum operating viscosity that is at most the same as the viscosity of the polymeric product to the liquefaction or melting temperature of same.

**4.** A plant for manufacturing polyurethane goods, comprising:
at least two tanks (2) for chemical reactants such as polyoils and isocyanates, at least one reactor (3) operatively associated with said at least two tanks (2) to create a chemical and preferably a polyurethane compound, at least one final use apparatus (8) to receive said chemical compound, and movement means to send the chemical compound to said final use apparatus (8); **characterised in that** it comprises adjusting means (5) operatively active at least on said at least one reactor (3) to maintain said chemical compound to a minimum operating viscosity that is at least the same as the viscosity of at least one reactant to the temperature of introduction of same into the reactor (3).

**5.** A plant as claimed in anyone of the preceding claims, wherein said adjusting means (5) is also active on said movement means and/or said final use apparatus (8).

**5.** A plant as claimed in anyone of the preceding claims, **characterized in that** it comprises a primary transfer duct (9) for connecting said tanks (2), reactor (3), movement means and final use apparatus in series; said adjusting means being active on said primary transfer duct (9) to keep said chemical compound to a temperature that is at least the same as the liquefaction or melting temperature of the chemical compound.

**7.** A plant as claimed in one or more of the preceding claims, comprising a secondary transfer duct (13) for directly connecting said at least two tanks (2) and said movement means; said adjusting means being active on said secondary transfer duct (13) to keep said chemical compound to a temperature that is at least the same as the liquefaction or melting temperature of the chemical compound.

**8.** A plant as claimed in one or more of the preceding claims, comprising a plurality of reactors (3) each having sizes and capacity adapted to produce an amount of chemical compound strictly necessary for completing at least one and/or few units of goods-manufacturing cycles.

**9.** A plant as claimed in one or more of the preceding claims wherein said movement means comprises vacuum-creating means operatively active upstream of said final use apparatus (8).

**10.** A plant for manufacturing polyurethane goods, comprising:
at least two tanks (2) for chemical reactants such as polyoils and isocyanates, at least one reactor (3) operatively associated with said at least two tanks (2) to create a chemical polyurethane compound, at least one final use apparatus (8) to receive said chemical compound, and movement means to send the chemical compound to said final use apparatus (8); **characterised in that** said at least one reactor (3) has sizes and capacity adapted to produce an amount of chemical compound that is strictly required for completing at least one and/or few units of goods-manufacturing cycles.

**11.** A plant as claimed in claim 10 further comprising adjusting means that is active on said at least one reactor (3) and on said movement means to maintain said chemical compound to a maximum operating temperature that is at most the same as the liquefaction or melting temperature of said compound, said adjusting means (5) being preferably active at least on said one reactor (3) to keep said chemical compound to a minimum operating temperature that is at least the same as the minimum solidification temperature of at least one of the reactants and being more preferably active at least on said at least one reactor (3) to keep said chemical compound to a maximum operating viscosity that is at most the same as the viscosity of the polymeric product to the liquefaction or melting temperature of said compound and/or to a minimum operating viscosity that is at least the same as the viscosity of at least one reactant to the temperature of introduction of it into the reactor (3).

**12.** A plant as claimed in claim 10 or 11 comprising a primary transfer duct (9) for connecting said tanks (2), reactor (3), movement means and final use apparatus in series; said adjusting means being active on said primary transfer duct (9) to maintain said chemical compound to a temperature that is at least the same as the liquefaction or melting temperature of said compound.

**13.** A plant as claimed in one or more of claims 10 to 12, comprising a secondary transfer duct (13) for directly connecting said at least two tanks (2) and said movement means; said adjusting means being active on said secondary transfer duct (13) to maintain said chemical compound to a temperature that is at least the same as the liquefaction or melting temperature of said compound.

**14.** A plant as claimed in one or more of claims 10 to 13 comprising a plurality of reactors (3) each having sizes and capacity adapted to produce an amount of chemical compound that is strictly required for completing at least one and/or few units of goods-manufacturing cycles.

**15.** A plant as claimed in one or more of claims 10 to 14, wherein said movement means comprises means (14) for creating the vacuum that is operatively active upstream of said final use apparatus (8).

**16.** A plant for manufacturing polyurethane goods, comprising:
at least two tanks (2) for chemical reactants such as polyoils and isocyanates, at least one reactor (3) operatively associated with said at least two tanks (2) to create a chemical polyurethane compound, at least one final use apparatus (8) to receive said chemical compound, and movement means to send the chemical compound to said final use apparatus (8); **characterised in that** it comprises adjusting means (5) operatively active at least on said at least one reactor (3) to maintain said chemical compound to a maximum operating temperature that is at most the same as the liquefaction or melting temperature of said compound, said adjusting means (5) being preferably active at least on said at least one reactor (3) to maintain said chemical compound to a minimum operating temperature that is at least the same as the minimum solidification temperature of at least one of the reactants and being more preferably active at least on said at least one reactor (3) to maintain said chemical compound to a maximum operating viscosity that is at most the same as a viscosity of the polymeric product to the liquefaction or melting temperature of it and/or to a minimum operating viscosity that is at least the same as the viscosity of at least one reactant to the temperature of introduction of same into the reactor (3), and **in that** said at least one reactor (3) has sizes and capacity adapted to produce an amount of chemical compound as strictly required for completing at least one and/or few units of goods-manufacturing cycles.

**17.** A plant as claimed in claim 16, comprising a primary transfer duct (9) for connecting said tanks (2), reactor (3), movement means and final use apparatus in series; said adjusting means being active on said primary transfer duct (9) to maintain said chemical compound to a temperature that is at least the same as the liquefaction or melting temperature of said compound.

**18.** A plant as claimed in one or more of claims 16 and 17, comprising a secondary transfer duct (13) for directly connecting said at least two tanks (2) and said movement means; said adjusting means being active on said secondary transfer duct (13) to maintain said chemical compound to a temperature that is at least the same as the liquefaction or melting temperature of said compound.

**19.** A plant as claimed in one or more of claims 16 to 18, comprising a plurality of reactors (3) each having sizes and capacity adapted to produce an amount of chemical compound as strictly required for completing at least one and/or few units of goods-manufacturing cycles.

**20.** A plant as claimed in one or more of claims 16 to 19 wherein said movement means comprises means (14) for creating the vacuum that is operatively active upstream of said final use apparatus (8).

## Amended claims

### Amended claims in accordance with Rule 86(2) EPC.

**1.** A method for manufacturing polyurethane goods, comprising the following steps:
- storing reactants such as polyols and isocyanates in a liquid state in at least two tanks (2);
- creating a polyurethane compound in at least one reactor (3) operatively associated with said at least two tanks (2); and
- sending said polyurethane compound to at least one final use apparatus (8),
**characterized in that** it further comprises a step of keeping the polyurethane compound in a viscosity range included between a minimum operating viscosity that is at least a viscosity of at least one reactant at the reactant temperature on introduction of the same into the reactor (3) and between a maximum operating viscosity that is at most a viscosity of the polyurethane compound at the liquefaction or melting temperature of the same.

**2.** A method as claimed in claim 2, **characterized in that** said step of keeping the polyurethane in a range of operating viscosity comprises a sub-step of keeping said polyurethane compound in a temperature range included between a minimum operating temperature that is at least the same as the minimum solidification temperature of at least one of the reactants and between a maximum operating temperature that is at most the same as the temperature causing liquefaction or melting of the polyurethane type under production.

**3.** A plane for manufacturing polyurethane goods according to the method of claims 1 or 2, comprising:
- at least two tanks (2) for chemical reactants such as polyols and isocyanates;
- At least one reactor (3) operatively associated with said at least two tanks (2) to create a polyurethane compound;
- at least one final use apparatus (8) to receive said polyurethane compound;
- movement means to send the polyurethane compound to said final use apparatus (8); and
- adjusting means operatively acting at least on said at least one reactor (3) to maintain said polyurethane compound in a range of operating viscosity comprised between a minimum operating viscosity that is at least a viscosity of at least one reactant at the reactant temperature on introduction of the same into the reactor (3) and between a maximum operating viscosity that is at most a viscosity of the polyurethane compound at the liquefaction or melting temperature of the same.

**4.** A plant as claimed in claim 3, **characterized in that** said adjusting means are operatively acting at least on said at least one reactor (3) to maintain said polyurethane compound in a range of operative temperature comprised between a minimum operating temperature that is at least the same as the minimum solidification temperature of at least one of the reactants and between a maximum operating temperature that is at most the same as the temperature causing liquefaction or melting of the polyurethane type under production.

**5.** A plant as c-aimed in anyone of the claims 3 or 4, wherein said adjusting means (5) -s also active on said movement means and/or said final use apparatus (8).

**6.** A plant as claimed in anyone of the preceding claims from 3 to 5, **characterized in that** it comprises a primary transfer duct (9) for connecting said tanks (2), reactor (3), movement means and final use apparatus in series; said adjusting means being active on said primary transfer duct (9) to keep said chemical compound at a temperature that is at least the same as the liquefaction or melting temperature of the chemical compound.

**7.** A plant as claimed in one or more of the preceding claims from 3 to 6, comprising a secondary transfer duct (13) for directly connecting said at least two tanks (2) and said movement means; said adjusting means being active on said secondary transfer duct (13) to keep said chemical compound at a temperature that is at least the same as the liquefaction or melting temperature of the chemical compound.

**8.** A plant as claimed in one or more of the preceding claims from 3 to 7, wherein said movement means comprises vacuum-creating means operatively active upstream of said final use apparatus (8).

**9.** A plant as claimed in anyone of the preceding claims from 3 to 8, wherein said movement means comprises means (14) for creating the vacuum that is operatively active upstream of said final use apparatus (8).

**10.** A plant as claimed in anyone of the preceding claims from 3 to 9, wherein it further comprises a plurality of reactors (3) each having sizes and capacity adapted to produce an amount of chemical compound that is strictly required for completing at least one and/or few units of goods-manufacturing cycles.
